# EUROPÄISCHE PATENTSCHRIFT

(11) **EP 2 550 196 B1**
(45) Veröffentlichungstag und Bekanntmachung des Hinweises auf die Patenterteilung: **07.05.2014**
(21) Anmeldenummer: 11712213.5
(22) Anmeldetag: 23.03.2011
(51) Int. Cl.: B63H 21/17, B63H 23/24, B63G 7/08, B63G 8/34, B63G 13/02, H02P 7/29

(54) **VERFAHREN ZUM BETRIEB EINES VON ZUMINDEST EINEM PULSBREITENMODULIERTEN UMRICHTER GESPEISTEN SCHIFFSANTRIEBSMOTORS SOWIE SCHIFFSANTRIEBSSYSTEM**
METHOD FOR OPERATING A SHIP PROPULSION MOTOR FED BY AT LEAST ONE PULSE WIDTH MODULATED INVERTER AND SHIP PROPULSION SYSTEM
MÉTHODE D'OPÉRATION D'UN MOTEUR PROPULSEUR D'UN BATEAU ALIMENTÉ PAR AU MOINS UN CONVERTISSEUR À MODULATION D'IMPULSION EN DURÉE ET SYSTÈME PROPULSEUR D'UN BATEAU

(30) Priorität: 25.03.2010 DE 102010012713
(43) Veröffentlichungstag der Anmeldung: 30.01.2013
(73) Patentinhaber: Siemens Aktiengesellschaft, 80333 München (DE)
(72) Erfinder: ECKERT, Jürgen, 91085 Weisendorf (DE); SCHOLZ, Dieter, 91085 Weisendorf (DE)
(86) Internationale Anmeldenummer: PCT/EP2011/054412
(87) Internationale Veröffentlichungsnummer: WO 2011/117278

(56) Entgegenhaltungen:
- EP-A1- 0 685 923
- WO-A2-02/057133
- DE-A1- 3 912 706
- DE-U1- 9 301 877
- US-A1- 2003 052 642
- US-B1- 6 439 831

## Beschreibung

Die Erfindung betrifft ein Verfahren zum Betrieb eines von zumindest einem Pulsumrichter gespeisten Schiffsantriebsmotors so wie generisch umschrieben im Patentanspruch 1 sowie ein Schiffsantriebssystem mit einem derartigen Schiffsantriebsmotor gemäß Oberbegriff des Patentanspruchs 5.

Beim Betrieb eines von einem Pulsumrichter gespeisten Schiffsantriebsmotors ist es bekannt, die Schaltelemente des Pulsumrichters (häufig auch als "Ventile" bezeichnet) mit einer Schaltfrequenz zu schalten, die sich entweder nicht oder nur in Abhängigkeit von Änderungen des Betriebszustandes des Schiffsantriebsmotors und/oder des Pulsumrichters ändert. Dabei kann es insbesondere im stationären Betrieb zu deutlich wahrnehmbaren Oberschwingungen im Geräuschspektrum der Maschine und somit auch des Schiffes kommen. Im akustischen Geräuschspektrum des Schiffes, häufig auch als "akustische Signatur" des Schiffes bezeichnet, finden sich dann eine oder mehrere Spektrallinien mit einem deutlich erhöhten Spitzenwert, während sich andere Bereiche des Spektrums durch nur sehr geringe Werte auszeichnen. Bei einem Einsatz des Schiffes als Forschungsschiff können die hierdurch erzeugten Geräusche Messungen im Wasser stören. Weiterhin können diese Geräusche Meerestiere stören, die gerade im Bereich der Spektrallinien mit den Spitzenwerten eine besondere Sensibilität aufweisen. Hierdurch kann beispielsweise aus Tierschutzgründen der Bewegungsradius von Kreuzfahrtschiffen oder Fähren eingeschränkt werden. Im Fall von Unterwasserschiffen können die Geräusche zu einer erhöhten Detektierbarkeit des Unterwasserschiffes führen.

Aus der DE 39 12 706 A1 ist ein Verfahren zum Betrieb einer von einem Pulsumrichter gespeisten Maschine bekannt, bei dem die Schaltfrequenz der Schaltelemente des Pulsumrichters unabhängig vom Betriebszustand des Schiffsantriebsmotors und des Pulsumrichters automatisch ständig geändert wird. Die Schaltfrequenzen und deren Änderungszeitpunkte werden dabei beispielsweise von einem Zufallsgenerator vorgegeben. Im Geräuschspektrum des Motors entsteht dann statt einer einzigen oder wenigen hohen Spektrallinien ein mehr oder weniger kontinuierliches Spektrum mit einem deutlich niedrigeren Spitzenwert.

Aus der EP 0 685 923 B1 ist es bekannt, die Schaltfrequenz der Schaltelemente des Pulsumrichters zur Geräuschreduzierung in Abhängigkeit von einer definierten Funktion zu ändern, wobei durch gezieltes Setzen von Parametern in der Funktion eine gleichmäßige Verteilung von Oberschwingungen über das Frequenzspektrum erzielt und somit die Geräusche reduziert werden.

Die US 2003/0052642 A1 offenbart ein Antriebssystem, bei dem eine gewünschte Soll-Schaltfrequenz manuell durch einen Nutzer ausgewählt werden kann. Allerdings wird diese Soll-Schaltfrequenz durch eine Umrichtersteuerung in Abhängigkeit von einem Sollwert für die Frequenz der Ausgangsspannung des Umrichters teilweise wieder geändert, um Verzerrungen der Umrichterausgangsspannung aufgrund parasitärer Effekte zu vermeiden.

Aus der WO 02/057133 A2, die als nächstliegender Stand der Technik angesehen wird, ist ein Verfahren zum Betrieb eines von zumindest einer Wechselrichtereinheit gespeisten Schiffsantriebsmotors bekannt, bei dem die Stromrichteransteuerung der Wechselrichtereinheit derart frei gestaltbar ist, dass durch Betriebspersonal des Schiffes die akustische Signatur gesteuert wird, um ein akustisches Geräuschspektrum des Schiffes zu verändern.

Durch diese Lösungen lässt sich zwar insgesamt der Geräuschpegel senken, aber es werden weiterhin Geräusche in an sich unerwünschten Frequenzbereichen erzeugt.

Es ist deshalb Aufgabe vorliegender Erfindung, bei einem Verfahren zum Betrieb eines von zumindest einem Pulsumrichter gespeisten Schiffsantriebsmotors, wie generisch umschrieben in Anspruch 1 und bei einem Schiffsantriebssystem gemäß Oberbegriff des Anspruchs 5 derartige Probleme zu vermeiden.

Die Lösung der auf das Verfahren gerichteten Aufgabe gelingt durch ein Verfahren gemäß Patentanspruch 1. Vorteilhafte Ausgestaltungen sind Gegenstand der Ansprüche 2 bis 4. Die Lösung der auf das Schiffsantriebssystem gerichteten Aufgabe gelingt durch ein Schiffsantriebssystem gemäß Patentanspruch 5. Vorteilhafte Ausgestaltungen sind Gegenstand der Ansprüche 6 bis 8. Ein Schiff mit einem derartigen Schiffsantriebssystem ist Gegenstand des Anspruchs 9. Ein Verfahren zum Betrieb eines derartigen Schiffes ist Gegenstand des Anspruchs 10.

Bei dem erfindungsgemäßen Verfahren wird die Schaltfrequenz unabhängig vom Betriebszustand des Schiffsantriebsmotors und des Pulsumrichters, d.h. beispielsweise unabhängig von der Ausgangsspannung des Pulsumrichters bzw. der Eingangsspannung des Schiffsantriebsmotors und/oder von der Drehzahl des Schiffsantriebsmotors, manuell durch Betriebspersonal des Schiffes gesteuert. Es werden somit die Schaltfrequenz und der Zeitpunkt, ab dem der Pulsumrichter mit der von dem Betriebspersonal bestimmten Schaltfrequenz betrieben wird, nicht automatisch, sondern manuell durch das Betriebspersonal bestimmt. Dem Betriebspersonal des Schiffes ist es somit möglich, das Geräuschspektrum (d.h. die akustische Signatur) des Schiffes zu verändern und somit gezielt ein bestimmtes gewünschtes Geräuschspektrum des Schiffes einzustellen. Das Geräuschspektrum kann dann gezielt entsprechend den zu einem bestimmten Zeitpunkt vorliegenden Anforderungen und Rahmenbedingungen für den Betrieb des Schiffes eingestellt werden. Beispielsweise kann es bei einem Forschungsschiff derart eingestellt werden, dass es Unterwassermessungen nicht stört. Bei einem Kreuzfahrtschiff oder einer Fähre kann es derart eingestellt werden, dass es bestimmte Meerestiere nicht stört. Im Fall eines Unterwasserschiffes kann es beispielsweise derart eingestellt werden, dass dessen Detektierbarkeit erschwert wird. Das Betriebspersonal kann sich zur Bestimmung der Schaltfrequenz dabei an Bord des Schiffes oder auch außerhalb des Schiffes befinden, wobei es im letzteren Fall per Fernsteuerung die Schaltfrequenz steuert (hier nicht beansprucht). Die Steuerung der Schaltfrequenz durch das Schiffspersonal kann hierbei direkt durch Angabe der Schaltfrequenz oder auch indirekt durch Angabe eines der Schaltfrequenz zugeordneten Parameters erfolgen.

Dabei wird der Schiffsantriebsmotor von mehreren Pulsumrichtern gespeist, wobei die Schaltelemente sämtlicher Pulsumrichter mit der jeweils gleichen Schaltfrequenz betrieben werden, so dass sie auch in der Summe ein gewünschtes Geräuschspektrum erzeugen.

Zur Erhöhung der Bedienungsfreundlichkeit kann dem Schiffspersonal eine zahlenmäßig begrenzte Anzahl möglicher Schaltfrequenzen zur Auswahl angeboten werden und das Schiffspersonal steuert die Schaltfrequenz dadurch, dass es aus dieser Anzahl eine Schaltfrequenz auswählt.

In einer für das Schiffspersonal besonders bedienungsfreundlichen Ausgestaltung des Verfahrens sind die Schaltfrequenzen jeweils einem Signaturtyp zugeordnet. Dem Schiffspersonal können dann diese Signaturtypen zur Auswahl angeboten werden und das Schiffspersonal steuert die Schaltfrequenz dadurch, dass es aus diesen Signaturtypen einen Signaturtyp auswählt. Die Signaturtypen können definierte unterschiedliche Geräuschspektren repräsentieren oder Einsatzbedingungen des Schiffes widerspiegeln (hier nicht beansprucht). Das Schiffspersonal kann somit auf besonders einfache Weise und ohne genaue Kenntnis der genauen Schaltfrequenzen allein anhand des Signaturtyps die Schaltfrequenz steuern. Letztendlich repräsentiert jedoch ein Signaturtyp ein definiertes akustisches Geräuschspektrum des Schiffes (d.h. die "akustische Signatur" des Schiffes), welches wiederum durch eine oder mehrere Spektrallinien mit einem deutlich erhöhten Spitzenwert im Vergleich zu anderen Bereichen des Spektrums mit vergleichsweise deutlich geringeren Werten charakterisiert ist.

Gemäß einer besonders vorteilhaften Ausgestaltung werden die Steuerimpulse für die Schaltelemente des Pulsumrichters durch Modulation eines Sollwertes mit einer Modulationsfrequenz erzeugt und zur Steuerung der Schaltfrequenz der Schaltelemente wird die Modulationsfrequenz unabhängig von dem Sollwert gesteuert.

Bei dem erfindungsgemäßen Schiffsantriebssystem ist die Einrichtung zur Erzeugung der Schaltimpulse für eine manuelle Steuerung der Schaltfrequenz durch Betriebspersonal des Schiffes mit einer Eingabeeinrichtung gekoppelt. Die im Zusammenhang mit dem erfindungsgemäßen Verfahren genannten Vorteile gelten in entsprechender Weise für das erfindungsgemäße Schiffsantriebssystem. Die Eingabeeinrichtung kann beispielsweise für das Schiffspersonal leicht zugänglich in der Schiffsbrücke angeordnet sein, während sich der Schiffsantriebsmotor, der Pulsumrichter und die Einrichtung zur Erzeugung der Schaltimpulse im Maschinenraum des Schiffes befinden (hier nicht beansprucht).

Dabei weist das Schiffsantriebssystem mehrere Pulsumrichter zur Speisung des Schiffsantriebsmotors und jeweils eine eigene Einrichtung zur Erzeugung von Schaltimpulsen veränderbarer Schaltfrequenz für jeden der Pulsumrichter auf, wobei sämtliche Einrichtungen zur Erzeugung von Schaltimpulsen mit der Eingabeeinrichtung derart gekoppelt sind, dass sichergestellt wird, dass alle Pulsumrichter mit der gleichen Schaltfrequenz betrieben werden und auch in der Summe ein gewünschtes Geräuschspektrum erzeugen.

Zur Erhöhung der Bedienungsfreundlichkeit kann die Eingabeeinrichtung dabei derart ausgebildet sein, dass sie dem Betriebspersonal eine zahlenmäßig begrenzte Anzahl möglicher Schaltfrequenzen zur Auswahl anbietet und dass zur Steuerung der Schaltfrequenz für das Betriebspersonal eine dieser Schaltfrequenzen auswählbar ist.

In einer für das Schiffspersonal besonders bedienungsfreundlichen Ausgestaltung sind die Schaltfrequenzen jeweils einem Signaturtyp zugeordnet und die Eingabeeinrichtung ist derart ausgebildet, dass sie dem Betriebspersonal die den Schaltfrequenzen zugeordneten Signaturtypen zur Auswahl anbietet und dass zur Steuerung der Schaltfrequenz für das Betriebspersonal einer dieser Signaturtypen auswählbar ist.

Bevorzugt ist die Einrichtung zur Erzeugung der Schaltimpulse derart ausgebildet, dass sie die Schaltimpulse für die Schaltelemente des Pulsumrichters durch Modulation eines Sollwertes mit einer Modulationsfrequenz erzeugt und dass die Steuerung der Schaltfrequenz der Schaltelemente durch Steuerung der Modulationsfrequenz unabhängig von dem Sollwert erfolgt.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: ein erstes Ausführungsbeispiel für ein erfindungsgemäßes Schiffsantriebssystem,
- FIG 2: ein vorteilhaft verwendetes Verfahren zur Erzeugung von Schaltimpulsen und
- FIG 3: ein zweites Ausführungsbeispiel für ein erfindungsgemäßes Schiffsantriebssystem.

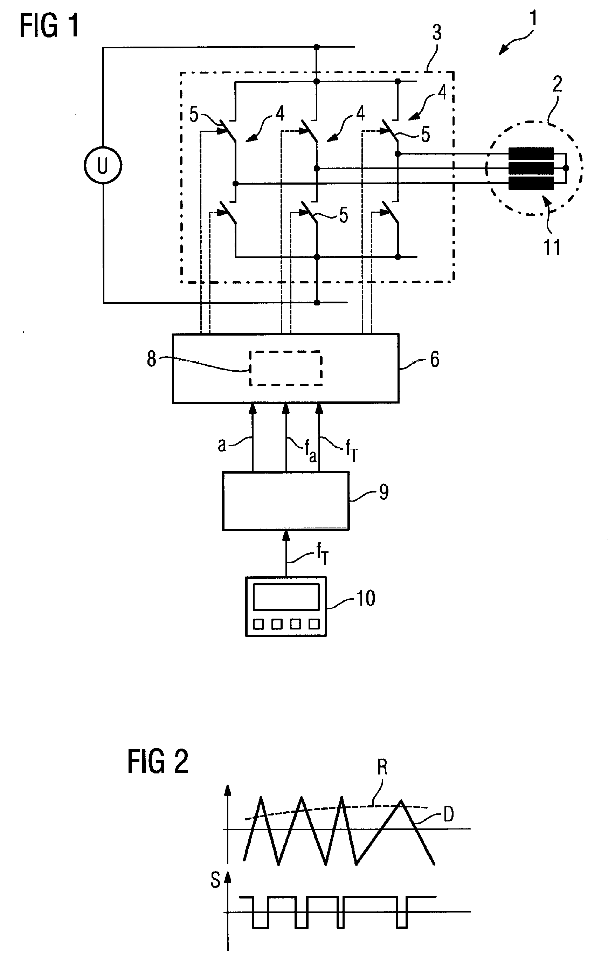

Die FIG 1 zeigt ein Schiffsantriebssystem 1 mit einem elektrischen Schiffsantriebsmotor 2, der an einen dreiphasigen Pulswechselrichter 3 angeschlossen ist und von diesem mit elektrischer Energie gespeist wird. Der Pulswechselrichter 3 weist hierbei drei Halbrücken 4 mit jeweils zwei Schaltelementen 5 (z.B. IGBT-Halbleiterschalter) auf und wird eingangsseitig von einer vorgegebenen Gleichspannung U, z.B. einer Batteriespannung oder einer eingeprägten Zwischenkreis-Gleichspannung eines Spannungszwischenkreis-Umrichters, gespeist. Die Schiffsantriebsmotor 2 ist als eine Drehfeldmaschine mit einem dreiphasigen Wicklungssystem 11 ausgebildet und in nicht näher dargestellter Weise mechanisch mit einem Schiffspropeller gekoppelt.

Für die Speisespannung des Motors 2 sind einer Einrichtung 6 zur Erzeugung von Schaltimpulsen für die Schaltelemente 5 des Pulswechselrichters 4 von einer Antriebsregelung 9 ein Sollwert a und eine Sollfrequenz fₐ vorgegeben. Diese Sollwerte bestimmen den in FIG 2 mit R dargestellten Verlauf des Sollwertes für die Speisespannung des Motors 2, der in einem Pulsbreiten-Modulator 8 mit einer sägezahnförmigen Modulationsspannung D verglichen wird. Deren Schnittpunkte bestimmen eine pulsbreitenmodulierte Steuerspannung S, aus deren Flanken die Steuerimpulse für die Schaltelemente 5 des Pulswechselrichters 3 abgeleitet werden. Dieser nach dem bekannten "Unterschwingungsverfahren" arbeitende Pulsbreitenmodulator 8 wird von einem Steuersignal f_{T} gespeist, das die Frequenz der sägezahnförmigen Modulationsspannung angibt.

Das Steuersignal f_{T} für die Modulationsfrequenz kann im Stand der Technik in Abhängigkeit von den Sollwerten a und fₐ im Modulator 8 der Einrichtung 6 selbst gebildet sein, so dass ein eigener Steuereingang nicht vorhanden ist. Insbesondere kann als Pulsbreitenmodulator 8 ein Mikroprozessor verwendet sein, der ohne eine direkte Bildung der Sägezahnspannung die Steuerflanken des Steuersignals S errechnet. Die Modulationsfrequenz ändert sich dann beim Stand der Technik nicht oder nur in Abhängigkeit von Änderungen des Betriebszustandes des Motors 2 oder des Pulswechselrichters 3. Im stationären Betriebszustand ist die Modulationsfrequenz f_{T} konstant.

Gemäß einer anderen aus dem Stand der Technik bekannten Lösung kann das Steuersignal für die Modulationsfrequenz f_{T} von einem Rauschgenerator geliefert werden, der nach einer statistischen Berechnung die Modulationsfrequenz f_{T} erzeugt, für die ein Mittelwert und eine Bandbreite vorgegeben ist. Dadurch kann z.B. eine Gauss-Verteilung der Modulationsfrequenz f_{T} erzielt werden.

Bei einer weiteren aus dem Stand der Technik bekannten Lösung kann eine gewünschte Modulationsfrequenz f_{T} zwar manuell durch einen Nutzer vorgegeben werden, aber diese wird teilweise von einer Umrichtersteuerung abhängig von einem Sollwert für die Frequenz der Ausgangsspannung des Pulswechselrichters 4 bzw. der Speisespannung des Motors 2 wieder geändert.

Im Gegensatz hierzu ist in FIG 1 der Pulsbreitenmodulator 8 von einem Steuersignal f_{T} für die Modulationsfrequenz angesteuert, das von einer Ein-/Ausgabeeinheit 10 in Abhängigkeit von einer manuellen Eingabe des Schiffspersonals erzeugt wird und unabhängig von den Sollwerten a und fₐ (d.h. beispielsweise unabhängig von der Frequenz und Höhe der Ausgangsspannung des Pulsumrichters 4 bzw. der Eingangsspannung des Motors 2 und somit von der Drehzahl des Motors 2) über die Antriebsregelung 9 an die Einrichtung 6 zur Erzeugung der Steuerimpulse weitergegeben wird. Die Einrichtung 6 zur Erzeugung der Schaltimpulse ist somit für eine manuelle Steuerung der Schaltfrequenz durch Betriebspersonal des Schiffes über die Antriebsregelung 9 mit der Ein-/Ausgabeeinheit 10 gekoppelt. Alternativ (hier nicht beansprucht) kann die Einrichtung 6 zur Erzeugung der Schaltimpulse auch direkt mit der Ein-/Ausgabeeinheit 10 oder indirekt über andere Komponenten des Schiffsantriebssystems 1 mit der Ein-/Ausgabeeinheit 10 gekoppelt sein. Die Ein-/Ausgabeeinheit 10 befindet sich hierzu auf der Brücke des Schiffes, während sich der Pulswechselrichter 3 und der Antriebsmotor 2 im Maschinenraum des Schiffes befinden (hier nicht beansprucht).

Mittels der Ein-/Ausgabeeinheit 10 ist es dem Schiffspersonal von der Brücke aus möglich, die Schaltfrequenz unabhängig vom Betriebszustand des Schiffsantriebsmotors 2 und des Pulswechselrichters 3 manuell zu steuern. Es können somit die Schaltfrequenz, der Zeitpunkt, ab dem der Pulswechselrichter 3 mit dieser Schaltfrequenz betrieben wird, und die Dauer des Betriebs mit dieser Schaltfrequenz manuell durch das Betriebspersonal bestimmt werden. Im Frequenzspektrum der Ausgangsspannung des Pulswechselrichters 3 entstehen dann in Abhängigkeit von der Schaltfrequenz gezielt eine oder mehrere Spektrallinien mit einem deutlich hohen Spitzenwert. Entsprechend ändern sich auch das Geräuschspektrum des Motors 2 und damit die Signatur des Schiffes. Die Schaltfrequenz ist darin als eine einzige auffällige Nadel oder mehrere auffällige Einzelnadeln im Spektrum wahrnehmbar, während andere Bereiche des Spektrums sich durch nur sehr geringe Werte auszeichnen.

Dem Betriebspersonal des Schiffes ist es somit möglich, das Geräuschspektrum (d.h. die akustische Signatur) des Schiffes zu verändern und somit gezielt ein bestimmtes gewünschtes Geräuschspektrum des Schiffes einzustellen.

Das Betriebspersonal und die Ein-/Ausgabeeinheit können sich (hier nicht beansprucht) zur Steuerung der Schaltfrequenz auch außerhalb des Schiffes befinden und per Fernsteuerung die Schaltfrequenz steuern.

Die Ein-/Ausgabeeinheit 10 kann dabei derart ausgebildet sein, dass sie dem Betriebspersonal eine zahlenmäßig begrenzte Anzahl möglicher Schaltfrequenzen ausgibt und zur Auswahl anbietet. Für das Betriebspersonal ist dann zur Bestimmung der Schaltfrequenz eine dieser Schaltfrequenzen auswählbar.

In einer für das Schiffspersonal besonders bedienungsfreundlichen Ausgestaltung sind die Schaltfrequenzen jeweils einem Signaturtyp zugeordnet und die Ein-/Ausgabeeinheit 10 ist derart ausgebildet, dass sie dem Betriebspersonal die den Schaltfrequenzen zugeordneten Signaturtypen ausgibt und zur Auswahl anbietet. Für das Betriebspersonal ist dann zur Steuerung der Schaltfrequenz einer dieser Signaturtypen auswählbar. Die Signaturtypen können sich beispielsweise (hier nicht beansprucht) durch die Anordnung der Spektrallinien mit deutlich erhöhten Spitzenwerten im Spektrum unterscheiden. Die Ein-/Ausgabeeinheit 10 setzt dann den gewünschten Signaturtyp in eine zugeordnete Modulationsfrequenz f_{T} um. Alternativ (hier nicht beansprucht) kann diese Umsetzung natürliche auch in der Antriebsregelung 9 oder in den Einrichtungen 6 erfolgen.

Bei der Ein-/Ausgabeeinheit 10 kann es sich beispielsweise um einen Touchscreen handeln (hier nicht beansprucht).

Das Schiffspersonal kann beispielsweise (hier nicht beansprucht) zu Beginn einer Fahrt einen gewünschten Signaturtyp, d.h. eine gewünschte Anordnung der Spektrallinien mit deutlich erhöhten Spitzenwerten im Spektrum, auswählen und somit die zugeordnete Schaltfrequenz einstellen. Das Schiffspersonal kann dann auch während der Fahrt gezielt zwischen unterschiedlichen Signaturtypen bzw. Schaltfrequenzen wechseln.

Anstatt nur eines einzigen dreiphasigen Wicklungssystems 11 kann der Motor 2 natürlich auch mehrere Wicklungssysteme aufweisen (hier nicht beansprucht), die von jeweils einem eigenen Pulswechselrichter gespeist werden, wobei sämtliche Pulswechselrichter mit der gleichen Schaltfrequenz betrieben werden.

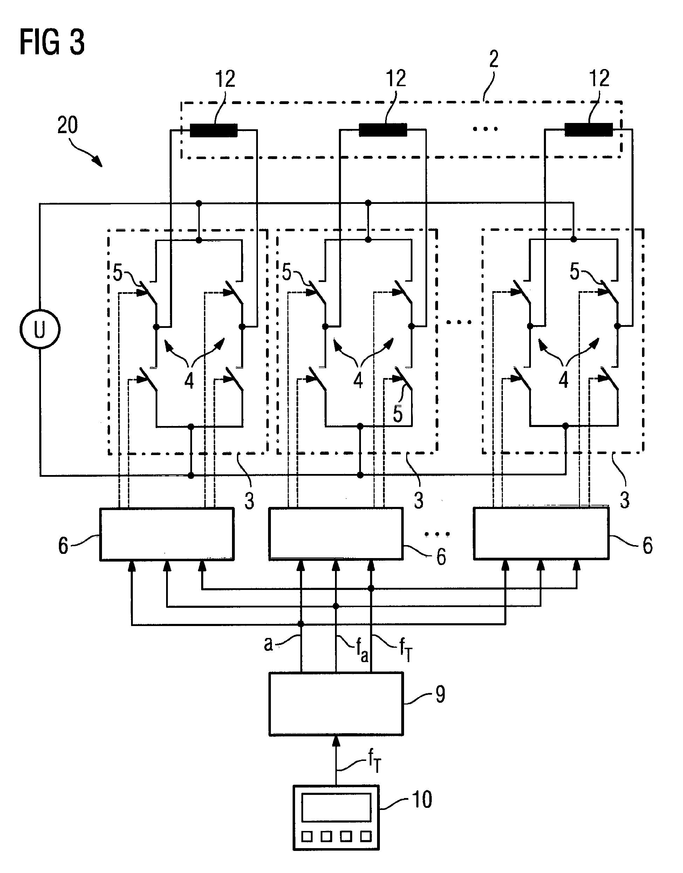

Ein in FIG 3 gezeigtes erfindungsgemäßes Schiffsantriebssystem 20 unterscheidet sich von dem in FIG 1 gezeigten Schiffsantriebssystem 1 dadurch, dass (in dieser Ausführungsform nicht beansprucht) der elektrische Schiffsantriebsmotor 2 mehrere (beispielsweise zwölf) von jeweils einem einphasigen Pulswechselrichter 3 gespeiste Wicklungsstränge 12 aufweist, von denen zur Vereinfachung der Darstellung nur drei dargestellt sind. Jeder der Pulswechselrichter 3 weist hierbei zwei Halbrücken 4 mit jeweils zwei Schaltelementen 5 (z.B. IGBT-Halbleiterschalter) auf. Bei dem Schiffsantriebssystem 20 handelt es sich beispielsweise um ein Schiffsantriebssystem für ein Unterwasserschiff, bei dem zur Geräuschreduzierung und aus Redundanzgründen eine derartige Einzelstrangspeisung vorteilhaft ist.

Das Schiffsantriebssystem 20 weist für jeden der Pulswechselrichter 3 jeweils eine eigene Einrichtung 6 zur Erzeugung von Schaltimpulsen veränderbarer Schaltfrequenz für den Pulswechselrichter 3 auf. Dabei sind sämtliche Einrichtungen 6 zur Erzeugung von Schaltimpulsen mit einer gemeinsamen Antriebsregelung 9 verbunden, die den Einrichtungen 6 zur Erzeugung der Schaltimpulse - wie im Zusammenhang mit FIG 1 erläutert - einen Sollwert a, eine Sollfrequenz fₐ und eine Modulationsfrequenz f_{T} vorgibt. Die Modulationsfrequenz f_{T} erhält die Antriebsregelung 9 wiederum von der Ein-/Ausgabeeinheit 10, über die das Schiffspersonal die Schaltfrequenz der Schaltelemente 5 der Pulswechselrichter 3 und somit das Geräuschspektrum des Schiffes unabhängig von der Sollfrequenz fₐ steuert. Da sämtliche Einrichtungen 6 zur Erzeugung von Schaltimpulsen über die Antriebsregelung 9 mit der gleichen Ein-/Ausgabeeinheit 10 gekoppelt sind, wird sichergestellt, dass sie auch mit der gleichen Schaltfrequenz betrieben werden.

## Patentansprüche

1. Verfahren zum Betrieb eines von zumindest einem Pulsumrichter (3) gespeisten Schiffsantriebsmotors (2), bei dem Schaltelemente (5) des Pulsumrichters (3) mit einer veränderbaren Schaltfrequenz geschaltet werden, wobei die Schaltfrequenz unabhängig vom Betriebszustand des Schiffsantriebsmotors (2) und des Pulsumrichters (3) manuell durch Betriebspersonal des Schiffes gesteuert wird, um ein akustisches Geräuschspektrum des Schiffes zu verändern, wobei der Schiffsantriebsmotor (2) von mehreren Pulsumrichtern (3) gespeist wird, wobei die Schaltelemente (5) sämtlicher Pulsumrichter (3) mit der jeweils gleichen Schaltfrequenz betrieben werden.

2. Verfahren nach Anspruch 1,
**dadurch gekennzeichnet, dass** dem Schiffspersonal eine zahlenmäßig begrenzte Anzahl möglicher Schaltfrequenzen zur Auswahl angeboten wird und dass das Schiffspersonal die Schaltfrequenz dadurch steuert, dass es aus dieser Anzahl eine Schaltfrequenz auswählt.

3. Verfahren nach Anspruch 2,
**dadurch gekennzeichnet, dass** die Schaltfrequenzen jeweils einem Signaturtyp zugeordnet sind und dem Schiffspersonal diese Signaturtypen zur Auswahl angeboten werden, wobei das Schiffspersonal die Schaltfrequenz dadurch steuert, dass es aus diesen Signaturtypen einen Signaturtyp auswählt.

4. Verfahren nach einem der vorhergehenden Ansprüche,
**dadurch gekennzeichnet, dass** die Steuerimpulse für die Schaltelemente (5) des Pulsumrichters (3) durch Modulation eines Sollwertes (R) mit einer Modulationsfrequenz (f_{T}) erzeugt werden und dass zur Steuerung der Schaltfrequenz der Schaltelemente (5) die Modulationsfrequenz (f_{T}) unabhängig von dem Sollwert (R) gesteuert wird.

5. Schiffsantriebssystem (1) mit einem Schiffsantriebsmotor (2), zumindest einem Pulsumrichter (3) mit Schaltelementen (5) zur Speisung des Schiffsantriebsmotors (2) und mit einer Einrichtung (6) zur Erzeugung von Schaltimpulsen veränderbarer Schaltfrequenz für die Schaltelemente (5) des Pulsumrichters (3), wobei die Einrichtung (6) zur Erzeugung der Schaltimpulse derart ausgebildet ist, dass die Schaltfrequenz unabhängig vom Betriebszustand des Schiffsantriebsmotors (2) und des Pulsumrichters (3) steuerbar ist,
**dadurch gekennzeichnet, dass** die Einrichtung (6) zur Erzeugung der Schaltimpulse für eine manuelle Steuerung der Schaltfrequenz durch Betriebspersonal des Schiffes mit einer Eingabeeinrichtung (10) gekoppelt ist um ein akustisches Geräuschspektrum des Schiffes, wenn vorhanden, zu verändern, weiter **gekennzeichnet durch** mehrere Pulsumrichter (3) zur Speisung des Schiffsantriebsmotors und jeweils einer eigenen Einrichtung (6) zur Erzeugung von Schaltimpulsen veränderbarer Schaltfrequenz für jeden der Pulsumrichter (3), wobei sämtliche Einrichtungen (6) zur Erzeugung von Schaltimpulsen mit der Eingabeeinrichtung (10) derart gekoppelt sind, dass die Schaltelemente (5) sämtlicher Pulsumrichter (3) mit der jeweils gleichen Schaltfrequenz betrieben werden.

6. Schiffsantriebssystem (1) nach Anspruch 5,
**dadurch gekennzeichnet, dass** die Eingabeeinrichtung (10) derart ausgebildet ist, dass sie dem Betriebspersonal eine zahlenmäßig begrenzte Anzahl möglicher Schaltfrequenzen zur Auswahl anbietet und dass zur Steuerung der Schaltfrequenz für das Betriebspersonal eine dieser Schaltfrequenzen auswählbar ist.

7. Schiffsantriebssystem (1) nach Anspruch 6,
**dadurch gekennzeichnet, dass** die Schaltfrequenzen jeweils einem Signaturtyp zugeordnet sind und dass die Eingabeeinrichtung (10) derart ausgebildet ist, sie dem Betriebspersonal die den Schaltfrequenzen zugeordneten Signaturtypen zur Auswahl anbietet, und dass zur Steuerung der Schaltfrequenz für das Betriebspersonal einer dieser Signaturtypen auswählbar ist.

8. Schiffsantriebssystem (1) nach einem der Ansprüche 5 bis 7, **dadurch gekennzeichnet, dass** die Einrichtung (6) zur Erzeugung der Schaltimpulse derart ausgebildet ist, dass sie die Schaltimpulse für die Schaltelemente (5) des Pulsumrichters (3) durch Modulation eines Sollwertes (R) mit einer Modulationsfrequenz (f_{T}) erzeugt und dass die Steuerung der Schaltfrequenz der Schaltelemente (5) durch eine Steuerung der Modulationsfrequenz (f_{T}) unabhängig von dem Sollwert (R) erfolgt.

9. Schiff, insbesondere Unterwasserschiff, mit einem Schiffsantriebssystem (1) nach einem der Ansprüche 5 bis 8.

10. Verfahren zum Betrieb eines Schiffes nach Anspruch 9, bei dem die Schaltfrequenz durch Betriebspersonal des Schiffes manuell während der Fahrt des Schiffes geändert wird.

## Claims

1. Method for operating a ship drive motor (2) fed by at least one pulse inverter (3), in which switching elements (5) of the pulse inverter (3) are switched with a variable switching frequency, wherein the switching frequency is controlled manually independently of the operating state of the ship drive motor (2) and of the pulse inverter (3) by crew of the ship in order to change an acoustic noise spectrum of the ship, wherein the ship drive motor (2) is fed by a number of pulse inverters (3), wherein the switching elements (5) of all pulse inverters (3) are operated with the same switching frequency in each case.

2. Method according to claim 1,
**characterised in that** the crew is provided with a choice of a restricted number of possible switching frequencies and that the crew controls the switching frequency by selecting one of these frequencies.

3. Method according to claim 2,
**characterised in that** the switching frequencies are each assigned a signature type and the crew is provided with a choice of the signature types, wherein the crew controls the switching frequency by selecting one of the signature types.

4. Method according to one of the preceding claims,
**characterised in that** the control pulses for the switching elements (5) of the pulse inverter (3) are generated by modulation of a required value (R) with a modulation frequency (f_{T}), and that for control of the switching frequency of the switching elements (5) the modulation frequency (f_{T}) is controlled independently of the required value (R).

5. Ship drive system (1) with a ship drive motor (2), at least one pulse inverter (3) with switching elements (5) for feeding the ship drive motor (2) and with a device (6) for generating switching pulses of variable switching frequency for the switching elements (5) of the pulse inverter (3), wherein the device (6) for generating the switching pulses is embodied such that the switching frequency is able to be controlled independently of the operating state of the ship drive motor (2) and of the pulse inverter (3),
**characterised in that** the device (6) for generating the switching pulses is coupled to an input device (10) for manual control of the switching frequency by crew of the ship, in order to change an acoustic noise spectrum of the ship, if present, further **characterised by** a number of pulse inverters (3) for feeding the ship drive motor and respectively a separate device (6) for generating switching pulses of variable switching frequency for each of the pulse inverters (3), wherein all devices (6) for generation of switching pulses are coupled to the input device (10) such that the switching elements (5) of all pulse inverters (3) are operated with the same switching frequency in each case.

6. Ship drive system (1) according to claim 5,
**characterised in that** the input device (10) is embodied such that it provides the crew with a selection of a restricted number of possible switching frequencies and that one of these frequencies is able to be selected by the crew for control of the switching frequency.

7. Ship drive system (1) according to claim 6,
**characterised in that** the switching frequencies are each assigned a signature type and that the input device (10) is embodied such that it provides the crew with a selection of the signature types assigned to the switching frequencies and that one these signature types is able to be selected by the crew for control of the switching frequency.

8. Ship drive system (1) according to one of claims 5 to 7,
**characterised in that** the device (6) for generating the switching pulses is embodied such that it generates the switching pulses for the switching elements (5) of the pulse inverter (3) by modulation of a required value (R) with a modulation frequency (f_{T}) and that the switching frequency of the switching elements (5) is controlled by controlling the modulation frequency (f_{T}) independently of the required value (R).

9. Ship, especially a submarine, with a ship drive system (1) according to one of claims 5 to 8.

10. Method for operating a ship according to claim 9, in which the switching frequency is changed by the crew of the ship manually while the ship is at sea.

## Revendications

1. Procédé pour faire fonctionner un moteur ( 2 ) de propulsion de bateau alimenté par au moins un convertisseur ( 3 ) à impulsions, dans lequel des éléments ( 5 ) de commutation du convertisseur ( 3 ) à impulsions sont fermés à une fréquence de commutation variable, dans lequel la fréquence de commutation est réglée manuellement par le personnel du bateau indépendamment de l'état de fonctionnement du moteur ( 2 ) de propulsion du bateau et du convertisseur ( 3 ) à impulsions pour modifier un spectre de bruit acoustique du bateau, le moteur ( 2 ) de propulsion du bateau étant alimenté par plusieurs convertisseurs ( 3 ) à impulsions, les éléments ( 5 ) de commutation de tous les convertisseurs ( 3 ) à impulsions fonctionnant à la même fréquence de commutation.

2. Procédé suivant la revendication 1,
**caractérisé en ce que** on donne au personnel du bateau le choix d'un nombre limité de fréquences de commutation possibles et **en ce que** le personnel du bateau règle la fréquence de commutation en choisissant une fréquence de commutation dans ce nombre.

3. Procédé suivant la revendication 2,
**caractérisé en ce que** les fréquences de commutation sont associées à un type de signature et on donne au personnel du bateau le choix de ces types de signature, le personnel du bateau réglant la fréquence de commutation en choisissant un type de signature parmi ces types de signature.

4. Procédé suivant l'une des revendications précédentes,
**caractérisé en ce que** les impulsions de commande des éléments ( 5 ) de commutation du convertisseur ( 3 ) à impulsions sont produites par modulation d'une valeur ( R ) de consigne par une fréquence ( f_{T} ) de modulation et **en ce que**, pour régler la fréquence de commutation des éléments ( 5 ) de commutation, la fréquence ( f_{T} ) de modulation est réglée indépendamment de la valeur ( R ) de consigne.

5. Système ( 1 ) de propulsion de bateau, comprenant un moteur ( 2 ) de propulsion de bateau, au moins un convertisseur ( 3 ) à impulsions ayant des éléments ( 5 ) de commutation pour l'alimentation du moteur ( 2 ) de propulsion de bateau et un dispositif ( 6 ) de production d'impulsions de commutation, de fréquence de commutation variable, pour les éléments ( 5 ) de commutation du convertisseur ( 3 ) à impulsions, le dispositif ( 6 ) étant constitué pour la production des impulsions de commutation de manière à ce que la fréquence de commutation soit réglée indépendamment de l'état de fonctionnement du moteur ( 2 ) de propulsion du bateau et du convertisseur ( 3 ) à impulsions,
**caractérisé en ce que** le dispositif ( 6 ) de production des impulsions de commutation est, pour un réglage manuel de la fréquence de commutation par le personnel du bateau, couplé à un dispositif ( 10 ) d'entrée pour modifier un spectre de bruit acoustique du bateau lorsqu'il est présent, **caractérisé en outre par** plusieurs convertisseurs ( 3 ) à impulsions pour l'alimentation du moteur de propulsion du bateau et à chaque fois, un dispositif ( 6 ) propre de production d'impulsions de commutation, de fréquence de commutation variable, pour chacun des convertisseurs ( 3 ) à impulsions, tous les dispositifs ( 6 ) de production d'impulsions de commutation étant couplés au dispositif ( 10 ) d'entrée de manière à faire fonctionner les éléments ( 5 ) de commutation de tous les convertisseurs ( 3 ) à impulsions à la même fréquence de commutation.

6. Système ( 1 ) de propulsion de bateau suivant la revendication 5,
**caractérisé en ce que** le dispositif ( 10 ) d'entrée est constitué de manière à donner au personnel un choix d'un nombre limité de fréquences de commutation possibles et **en ce que**, pour le réglage de la fréquence de commutation, l'une de ces fréquences de commutation peut être choisie par le personnel.

7. Système ( 1 ) suivant la revendication 6, **caractérisé en ce que** les fréquences de commutation sont associées respectivement à un type de signature et **en ce que** le dispositif ( 10 ) d'entrée est constitué de manière à donner au personnel le choix des types de signature associées aux fréquences de commutation et **en ce que** pour le réglage de la fréquence de commutation, l'un de ces types de signature peut être choisi par le personnel.

8. Système ( 1 ) suivant l'une des revendications 5 à 7, **caractérisé en ce que** le dispositif ( 6 ) de production d'impulsions de commutation est constitué de manière à produire des impulsions de commutation des éléments ( 5 ) de commutation du convertisseur ( 3 ) à impulsions, par modulation d'une valeur ( R ) de consigne par une fréquence ( f_{T} ) de modulation, et **en ce que** le réglage de la fréquence de commutation des éléments ( 5 ) de commutation s'effectue indépendamment de la valeur ( R ) de consigne par un réglage de la fréquence ( f_{T} ) de modulation.

9. Bateau, notamment sous-marin, ayant un système ( 1 ) de propulsion suivant l'une des revendications 5 à 8.

10. Procédé pour faire fonctionner un bateau suivant la revendication 9, dans lequel la fréquence de commutation est modifiée par le personnel du bateau manuellement pendant la course du bateau.
